# EUROPEAN PATENT SPECIFICATION

(11) **EP 2 965 604 B1**
(45) Date of publication and mention of the grant of the patent: **31.05.2017**
(21) Application number: 15175004.9
(22) Date of filing: 02.07.2015
(51) Int. Cl.: A01B 73/04, A01B 73/02, A01B 73/06

(54) **FOLDING MECHANISM FOR FOLDABLE AGRICULTURAL MACHINERY**
FALTMECHANISMUS FÜR FALTBARES LANDWIRTSCHAFTLICHES GERÄT
MÉCANISME DE PLIAGE POUR MACHINE AGRICOLE

(30) Priority: 02.07.2014 DK 201470412
(43) Date of publication of application: 13.01.2016
(73) Proprietor: Kaastrup, Søren, 7870 Roslev (DK)
(72) Inventor: Kaastrup, Søren, 7870 Roslev (DK)
(74) Representative: Nielsen, Leif

(56) References cited:
- EP-A2- 0 408 388
- US-A- 4 074 766

## Description

### Field of the Invention

The present invention concerns a folding mechanism for collapsible agricultural machines, wherein the agricultural machines have a first part and a second part that are movable in relation to each other about a pivot, where the folding mechanism includes at least one hydraulic cylinder with a piston rod, where the hydraulic cylinder is fastened to the first part of the agricultural machine, and where the cylinder piston rod is connected to the second part of the agricultural machine via a fitting.

### Background of the Invention

Agricultural machines often have a size covering a width appreciably greater than the width of the vehicle, typically a tractor, that tows or pushes the agricultural machine. The greater width of an agricultural machine, the fewer times the vehicle is therefore to drive back and forth in order to cover the agricultural area.

When the agricultural machine is to be transported to and from the agricultural area, it is practical, expedient and not the least also by law on public roads required to minimise the width of the agricultural machine. One possibility of minimising the width is indicated in FR2354037 where a large part of the agricultural machine is turned and thereby becomes smaller in width, but on the other hand longer in the direction of driving. Another possibility is indicated in FR2655510, where the agricultural machine has a boom arm that can be extended and retracted as a telescoping tube. A third possibility is indicated in CA1258835, where the agricultural machine has a boom that may be folded or collapsed such that the free ends of the boom arm are folded away from the normal direction of use, whereby the length of the agricultural machine is increased.

In addition, from US 4074766 A is known a folding mechanism for collapsible agricultural machines, wherein the agricultural machines have a first part and a second part that are movable in relation to each other about a pivot, where the folding mechanism includes at least one hydraulic cylinder with a piston rod, where the hydraulic cylinder is fastened to the first part of the agricultural machine, and where the cylinder piston rod is connected to the second part of the agricultural machine via a fitting, and where the piston rod of the cylinder has a cross-pin.

The way of folding or collapsing the boom arm/arms of an agricultural machine is therefore, as mentioned, already known, but is a source of problems as it is performed with an intricate system of lattice arms and a lot of cardinal points in the form of movable parts rendering the entire mechanism vulnerable and cause a lot of maintenance.

For agricultural machines mounted at the front of e.g. a tractor, where the agricultural machine is capable of collapsing into greater or lesser sections, where the collapsing occurs in a direction opposite the driving direction, there is a constant pressure on the collapsing mechanism of the construction in the collapsing direction when the agricultural machine is in use. If the collapsing mechanism cannot stand the pressure, the collapsible sections of the agricultural machine will collapse, and the agricultural machine therefore will not operate as intended.

Compared with the prior art, by the invention there is, among others, achieved a reliable and simple folding mechanism that entails minimal costs of maintenance.

### Object of the Invention

It is the object of the invention to provide a folding mechanism for collapsible agricultural machines which is extremely reliable, simple, and which entail minimal costs of maintenance, as there are very few movable parts.

### Description of the Invention

According to a first aspect of the invention, the above mentioned object is achieved by a folding mechanism for collapsible agricultural machines as described in the introduction and as indicated in the preamble of claim 1, wherein the piston rod of the cylinder has a cross-pin which is inserted into elongated cutouts in the fitting on the second part of the agricultural machine, where the elongated cutouts include a first end and a second end, where the elongated cutouts are arranged in the fitting and at either side of the piston rod, where the folding mechanism further includes a locking device between the cross-pin and funnel-shaped locking means on the first part of the agricultural machine.

This will enable collapsing of the boom arms of an agricultural machine, thereby minimising the width of the agricultural machine and providing a folding mechanism which is extremely reliable, simple, and with minimal costs of maintenance.

In a second aspect, the present invention also concerns a method for using a folding mechanism for collapsible agricultural machines, wherein the method includes a closing and/or an opening sequence, or an opening and/or a closing sequence, comprising the following steps for closing the folding mechanism:
- the cylinder piston rod is retracted into the cylinder;
- the cross-pin of the piston rod is moved towards the first end of the elongated cutouts;
- the cross-pin is moved along the funnel-shaped locking means towards the bottom of the funnel-shaped locking means;
and the following steps for opening the folding mechanism:
- the cylinder piston rod is extended out of the cylinder;
- the cross-pin of the piston rod is moved towards the second end of the elongated cutouts;
- the cross-pin is moved along the funnel-shaped locking means towards the bottom of the funnel-shaped locking means.

This will enable a folding mechanism for collapsible agricultural machines to operate in an easy and reliable way.

The method may of course have all the advantages of the folding mechanism as otherwise indicated by the invention.

In a third aspect, the present invention also concerns use of a folding mechanism for collapsible agricultural machines according to the invention, where the agricultural machines are for agriculture.

This will enable using a folding mechanism for collapsible agricultural machines where weather, wind, dust, vibrations and the like require robust implements with robust, simple, stable and reliable operational means.

For agricultural machines that are front-mounted on e.g. a tractor, where the agricultural machine is capable of folding in a direction opposite the driving direction such that the free end of the agricultural machine is pointed rearwards of the driving direction, a strong and durable locking mechanism is required. One possibility is to use the hydraulic system with hydraulic cylinders having a size capable of absorbing the forces, but instead the invention uses a mechanical lock for absorbing the forces acting on the free ends of the agricultural machine. Absorption of the forces is effected in that a cross-pin at the bottom of the elongated cutout is transmitting the action of force to funnel-shaped locking means, which is described in more detail in the description below. By this solution, the hydraulic cylinder can be minimised to a dimension which is only capable of moving the free ends of the agricultural machine between the two extreme positions, namely a transport position and a position of use.

For agricultural machines that are rear-mounted on e.g. a tractor, where the agricultural machine is capable of folding in a direction opposite the driving direction such that the free ends of the agricultural machine are pointed rearwards of the driving direction, the locking device operates in the same way.

### Description of the Drawing

The invention will now be explained more closely in the following by description of non-limiting embodiments with reference to the drawing, where:
- Fig. 1: shows a folding mechanism for collapsible agricultural machines where the agricultural machine is collapsed;
- Fig. 2: shows a folding mechanism for collapsible agricultural machines where the agricultural machine is in a position between unfolded and collapsed condition;
- Fig. 3: shows a folding mechanism for collapsible agricultural machines where the agricultural machine is unfolded;
- Fig. 4: shows a folding mechanism for collapsible agricultural machines in unfolded condition mounted at the front of a tractor; and
- Fig. 5: shows a folding mechanism for collapsible agricultural machines in collapsed condition mounted at the front of a tractor.

### List of designations

- 1: folding mechanism
- 2: a first part
- 3: a second part
- 4: pivot
- 5: cylinder
- 6: piston rod
- 7: cross-pin
- 8: elongated cutouts
- 9: a first end
- 10 a: second end
- 11: locking device
- 12: funnel-shaped locking means
- 13: bottom of funnel-shaped locking means
- 14: tractor
- 15: front wheel

### Detailed Description of Embodiments of the Invention

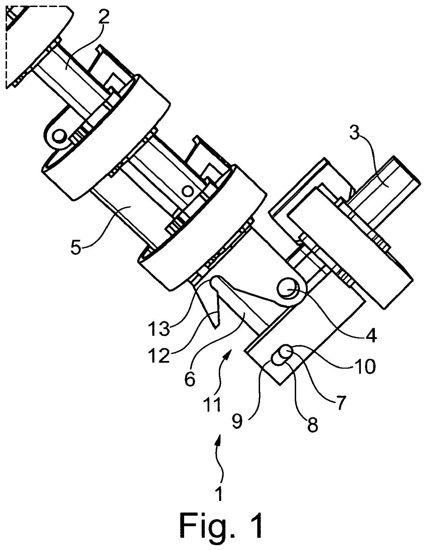

A folding mechanism for collapsible agricultural machines according to the invention is shown on Figs. 1-3.

The Figures should be described one by one, using consecutive numbers as the description proceeds. Hereby is achieved a full overview of the details appearing on respective drawings.

Fig. 1 shows a folding mechanism 1 for collapsible agricultural machines where a first part 2 and a second part 3 can be moved in relation to each other about a pivot 4, and where a cylinder 5 is connected to the first part 2 of an agricultural machine, and where the piston rod 6 of the cylinder 5 is connected to the second part 3 of an agricultural machine.

As seen on Fig. 1, the cylinder 5 has a piston rod 6 which in turn has a cross-pin 7 inserted into elongated cutouts 8, where the elongated cutouts 8 has a first end 9 and a second end 10, where the elongated cutouts 8 are disposed at either side of the piston rod 6 and fastened to the second part 3 of an agricultural machine.

On Fig. 1 is also seen that the folding mechanism 1 includes a locking device 11 between the cross-pin 7 and funnel-shaped locking means 12 on the first part 2 of an agricultural machine.

Finally, on Fig. 1 is seen that the piston rod 6 of the cylinder 5 is pushed out of the cylinder 5, whereby the cross-pin 7 of the piston rod 6 is moved towards second end 10 of the elongated cutouts 8, and the first part 2 and the second part 3 of the agricultural machine are therefore collapsed.

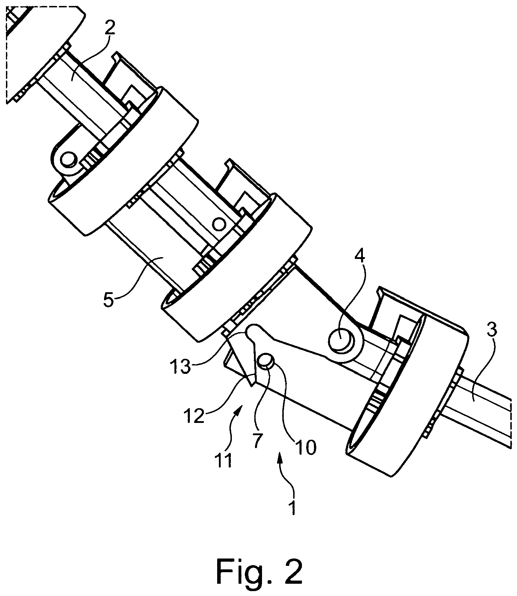

It appears on Fig. 2 that the piston rod 6 of the cylinder 5 is partly retracted into the cylinder 5, the cross-pin 7 of the piston rod 6 is in contact with the funnel-shaped locking means 12 on the first part of an agricultural machine, and the first part 2 and the second part 3 of the agricultural machine are therefore on their way to be collapsed.

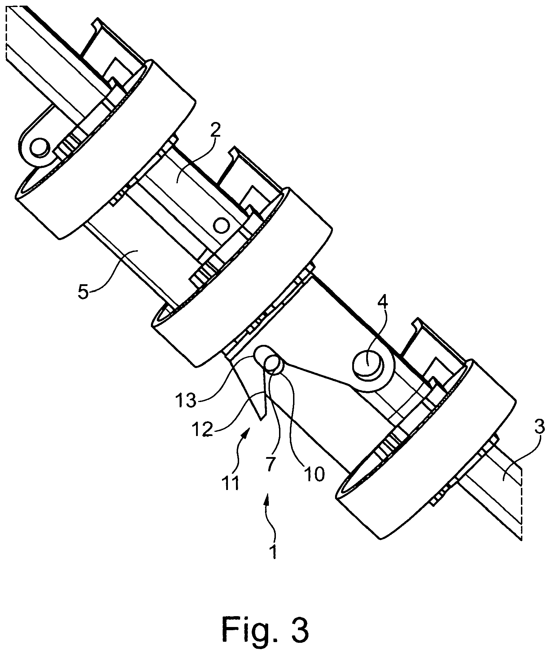

It appears on Fig. 3 that the piston rod 6 of the cylinder 5 is almost completely retracted into the cylinder 5, the cross-pin 7 of the piston rod 6 is close to be in contact with the bottom 13 of the funnel-shaped locking means 12 on the first part 2 of an agricultural machine, and the first part 2 and the second part 3 of the agricultural machine are therefore almost completely unfolded.

The invention is not limited to the above mentioned embodiments which only serve the purpose of clarifying the preferred embodiments of the invention. It is therefore obvious that after reading this description, the skilled in the art will be able to perform variants of the invention which are not described in detail in this document.

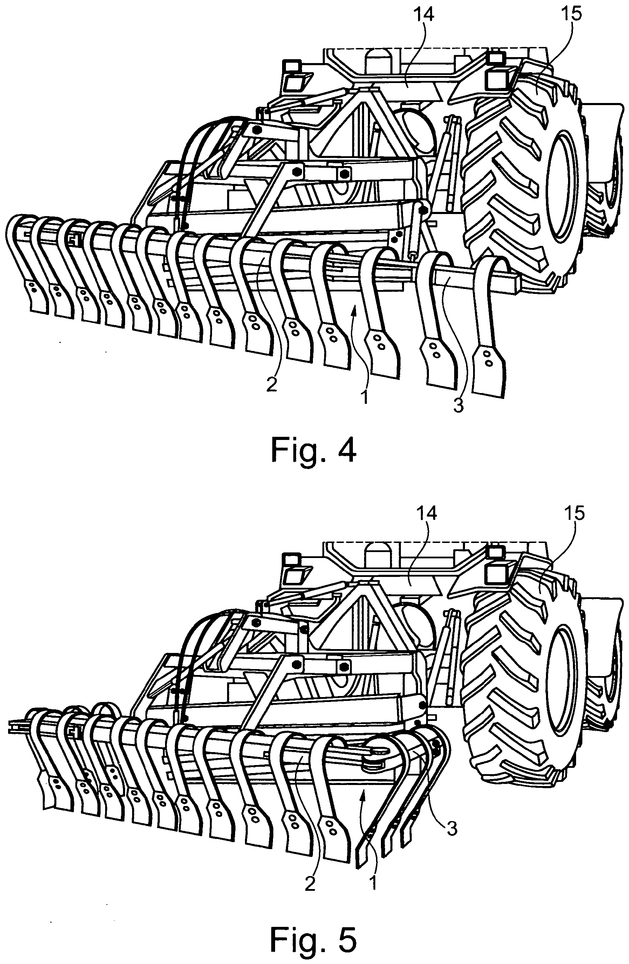

On Fig. 4 appears a folding mechanism 1 for collapsible agricultural machines mounted on an agricultural machine which is in unfolded condition, and where the agricultural machine is mounted at the front of a tractor 14 with front wheels 15. The agricultural machine is unfolded such that the second part 3 is substantially in continuation of the first part 2, and such that the second part 3 has its free end pointing substantially at right angles to the driving direction of the tractor 14.

On Fig. 5 appears a folding mechanism 1 for collapsible agricultural machines mounted on an agricultural machine which is in collapsed condition, and where the agricultural machine is mounted at the front of a tractor 14. The agricultural machine is folded and collapsed such that the second part 3 is substantially at right angles to the first part 2, and such that the second part 3 has its free end pointing rearwards relative to the driving direction of the tractor 14.

## Claims

1. A folding mechanism (1) for collapsible agricultural machines, wherein the agricultural machines have a first part (2) and a second part (3) that are movable in relation to each other about a pivot (4), where the folding mechanism (1) includes at least one hydraulic cylinder (5) with a piston rod (6), where the hydraulic cylinder (5) is fastened to the first part (2) of the agricultural machine, and where the cylinder piston rod (6) is connected to the second part (3) of the agricultural machine via a fitting, and where the cylinder piston rod (6) has a cross-pin (7), **characterised in that** the cross-pin (7) is inserted into elongated cutouts (8) in the fitting on the second part (3) of the agricultural machine, where the elongated cutouts (8) include a first end (9) and a second end (10), where the elongated cutouts (8) are arranged in the fitting and at either side of the piston rod (6), where the folding mechanism (1) further includes a locking device (11) between the cross-pin (7) and funnel-shaped locking means (12) on the first part (2) of the agricultural machine.

2. A method for using a folding mechanism (1) for collapsible agricultural machines according to claim 1, wherein the method includes a closing and/or an opening sequence, or an opening and/or a closing sequence, **characterised by** the following steps for closing the folding mechanism (1):
- the cylinder piston rod (6) is retracted into the cylinder (5);
- the cross-pin (7) of the piston rod is moved towards the first end (9) of the elongated cutouts;
- the cross-pin (7) is moved along funnel-shaped locking means (12) towards the bottom (13) of the funnel-shaped locking means; and
the following steps for opening the folding mechanism (1):
- the cylinder piston rod (6) is extended out of the cylinder (5);
- the cross-pin (7) of the piston rod is moved towards the second end (10) of the elongated cutouts;
- the cross-pin (7) is moved along the funnel-shaped locking means (12) towards the bottom (13) of the funnel-shaped locking means.

3. Use of a folding mechanism (1) for collapsible agricultural machines according to claim 1, **characterised in that** the agricultural machines are for agriculture.

## Patentansprüche

1. Faltmechanismus (1) für faltbare landwirtschaftliche Geräte, wobei die landwirtschaftlichen Geräte einen ersten Teil (2) und einen zweiten Teil (3) aufweisen, die um einen Drehpunkt (4) gegenseitig beweglich sind, wobei der Faltmechanismus (1) mindestens einen Hydraulikzylinder (5) mit einer Kolbenstange (6) umfasst, wobei der Hydraulikzylinder (5) zu dem ersten Teil (2) des landwirtschaftlichen Geräts befestigt ist, und wobei die Zylinder-Kolbenstange (6) durch einen Beschlag mit dem zweiten Teil (3) des landwirtschaftlichen Geräts verbunden ist, und wobei die Zylinder-Kolbenstange (6) einen Querstift (7) aufweist, **dadurch gekennzeichnet, dass** der Querstift (7) in längliche Ausschnitte (8) im Beschlag (3) auf dem zweiten Teil (3) des landwirtschaftlichen Geräts eingeführt ist, wobei die länglichen Ausschnitte (8) jeweils ein erstes Ende (9) und ein zweites Ende (10) umfassen, wobei die länglichen Ausschnitte (8) im Beschlag und auf beiden Seiten der Kolbenstange (6) angeordnet sind, wobei der Faltmechanismus (1) ferner eine Verriegelungsvorrichtung (11) zwischen dem Querstift (7) und dem trichterförmigen Verriegelungsmittel (12) auf dem ersten Teil (2) des landwirtschaftlichen Geräts umfasst.

2. Verfahren zur Anwendung eines Faltmechanismus (1) für faltbare landwirtschaftliche Geräte nach Anspruch 1, wobei das Verfahren eine Schließ- und/oder eine Öffnungs-Sequenz oder eine Öffnungs- und/oder Schließ-Sequenz umfasst, **gekennzeichnet durch** die folgenden Verfahrensschritte zum Schließen des Faltmechanismus (1):
- die Kolbenstange (6) wird in den Zylinder (5) zurückgezogen;
- der Querstift (7) der Kolbenstange wird gegen das erste Ende (9) der länglichen Ausschnitte verschoben;
- der Querstift (7) wird entlang trichterförmigen Verriegelungsmitteln (12) gegen den Boden (13) des trichterförmigen Verriegelungsmittels verschoben;
und durch die folgenden Verfahrensschritte zum Öffnen des Faltmechanismus (1):
- die Kolbenstange (6) wird aus dem Zylinder heraus verschoben;
- der Querstift (7) der Kolbenstange wird gegen das zweite Ende (10) der länglichen Ausschnitte verschoben;
- die Querstift (7) wird entlang dem trichterförmigen Verriegelungsmittel (12) gegen den Boden (13) des trichterförmigen Verriegelungsmittels verschoben.

3. Anwendung eines Faltmechanismus (1) für faltbare landwirtschaftliche Geräte nach Anspruch 1, **dadurch gekennzeichnet, dass** die landwirtschaftlichen Geräte zum Einsatz in der Landwirtschaft eingerichtet sind.

## Revendications

1. Mécanisme de pliage (1) pour machines agricoles pliables, les machines agricoles présentant une première partie (2) et une seconde partie (3) qui sont mobiles l'une par rapport à l'autre autour d'un pivot (4), le mécanisme de pliage (1) comprenant au moins un vérin hydraulique (5) avec une tige de piston (6), dans lequel le vérin hydraulique (5) est attaché à la première partie (2) de la machine agricole, et dans lequel la tige de piston de vérin (6) est reliée à la seconde partie (3) de la machine agricole par l'intermédiaire d'un raccord, et dans lequel la tige de piston de vérin (6) possède une tige transversale (7), **caractérisé en ce que** la tige transversale (7) est insérée dans des découpes allongées (8) du raccord sur la seconde partie (3) de la machine agricole, les découpes (8) allongées comprenant une première extrémité (9) et une seconde extrémité (10), les découpes allongées (8) étant disposées dans le raccord et de chaque côté de la tige de piston (6), le mécanisme de pliage (1) comprenant en outre un dispositif de verrouillage (11) entre la tige transversale (7) et des moyens de verrouillage en forme d'entonnoir (12) sur la première partie (2) de la machine agricole.

2. Procédé d'utilisation d'un mécanisme de pliage (1) pour machines agricoles pliables selon la revendication 1, le procédé comprenant une séquence de fermeture et/ou d'ouverture, ou une séquence d'ouverture et/ou de fermeture, **caractérisé par** les étapes suivantes pour fermer le mécanisme de pliage (1) :
- la tige de piston de vérin (6) est rétractée dans le vérin (5);
- la tige transversale (7) de la tige de piston est déplacée vers la première extrémité (9) des découpes allongées;
- la tige transversale (7) est déplacée le long des moyens de verrouillage en forme d'-entonnoir (12) vers le fond (13) du moyen de verrouillage en forme d'entonnoir; et
les étapes suivantes pour ouvrir le mécanisme de pliage (1) :
- la tige de piston de vérin (6) sort du vérin (5);
- la tige transversale (7) de la tige de piston est déplacée vers la seconde extrémité (10) des découpes allongés;
- la tige transversale (7) est déplacée le long des moyens de verrouillage en forme d'entonnoir (12) vers le fond (13) du moyen de verrouillage en forme d'entonnoir.

3. L'utilisation d'un mécanisme de pliage (1) pour machines agricoles pliables selon la revendication 1, **caractérisé en ce que** les machines agricoles sont pour l'agriculture.
